Europäisches Patentamt

European Patent Office

Office européen des brevets

(11) Numéro de publication: **0 263 743 B1**

## FASCICULE DE BREVET EUROPEEN

(45) Date de publication de fascicule du brevet: **27.05.92**  (51) Int. Cl.⁵: **G02F 1/35**

(21) Numéro de dépôt: **87402166.0**

(22) Date de dépôt: **29.09.87**

(54) **Dispositif et procédé de mesure des caractéristiques optiques non linéaires d'ordre trois dans une phase isotrope.**

(30) Priorité: **03.10.86 FR 8613838**

(43) Date de publication de la demande:
**13.04.88 Bulletin 88/15**

(45) Mention de la délivrance du brevet:
**27.05.92 Bulletin 92/22**

(84) Etats contractants désignés:
**BE CH DE GB IT LI**

(56) Documents cités:

**APPL. PHYS. B, vol. 32, 1983, pages 137-143, Springer-Verlag; M. THALHAMMER et al.: "Measurement of third-order nonlinear susceptibilities by non-phase matched third-harmonic generation"**

**OPTICS COMMUNICATIONS, vol. 56, no. 1, 1 novembre 1985, pages 67-72, Elsevier Science Publishers B.V., (North-Holland Physics Publishing Division); H.J. LEHMEIER et al.: "Nonresonant third order hyperpolarizability of rare gases and N2 determined by third harmonic generation"**

**APPLIED OPTICS, vol. 14, no. 6, juin 1975;**

**C.G. BETHEA: "Experimental technique of dc induced SHG in liquids: measurement of the nonlinearity of CH2I2"**

**PHYSICAL REVIEW A, vol. 32, no. 4, octobre 1985, pages 2352-2363, The American Physical Society; F. KAJZAR et al.: "Third-harmonic generation in liquids"**

(73) Titulaire: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Kajzar, François**
**28, rue Nogues**
**F-78960 Voisins le Bretonneux(FR)**
Inventeur: **Messier, Jean**
**27, avenue des Roches**
**F-91190 Gif-sur-Yvette(FR)**

(74) Mandataire: **Mongrédien, André et al**
**c/o BREVATOME 25, rue de Ponthieu**
**F-75008 Paris(FR)**

# EP 0 263 743 B1

## Description

La présente invention a pour objet un dispositif selon la revendication 1 et un procédé selon les revendications 3 et 4 de mesure des caractéristiques optiques non linéaires d'ordre trois dans un milieu présentant une phase isotrope : coefficient de susceptibilité d'ordre trois et dispersion d'indices.

L'apparition d'un harmonique trois lumineux peut être provoquée par l'excitation d'un corps transparent à l'aide d'un faisceau lumineux de grande intensité tel que celui produit par un laser : l'énergie apportée par les photons aux électrons du corps est en partie restituée sous forme de rayonnement lumineux d'harmonique trois d'intensité fortement non linéaire en fonction de l'intensité excitatrice, et proportionnelle au carré d'un coefficient dit de susceptibilité d'ordre trois dépendant du matériau.

Les dispositifs dont le but consiste à mesurer les caractéristiques d'un corps concernant cette émission d'harmonique trois se heurtent cependant à des problèmes délicats de précision, car l'intensité d'émission varie également fortement en fonction de l'épaisseur traversée par le faisceau lumineux avec une période égale à ce qu'on appelle la longueur de cohérence $\ell_c = \lambda_\omega / 6(n_{3\omega}-n_\omega)$, où $\lambda_\omega$ désigne la longueur d'onde de la lumière incidente de pulsation $\omega$ et où $n_\omega$ et $n_{3\omega}$ désignent les indices de réfraction du corps aux lumières de pulsation $\omega$ et $3\omega$. Cette longueur est usuellement de l'ordre du micromètre, ou de la dizaine de micromètres. Le problème est encore plus délicat quand on travaille sur des milieux liquides par exemple, qui obligent la lumière à traverser deux parois d'un réservoir contenant le liquide à analyser : le rayonnement d'harmonique trois recueilli est alors la somme du rayonnement harmonique émis par le liquide et de ceux produits par les parois, sans qu'il soit possible de les distinguer simplement.

C'est ainsi qu'on connaît (Meredith, Buchalter, Hanzlik, Journal of Chemistry and Physics n°78, p.1533) un dispositif d'après lequel un faisceau lumineux parallèle traverse un réservoir de largeur variable empli par le corps dont il faut mesurer les caractéristiques, l'épaisseur des parois du réservoir étant elle-même variable. La mesure consiste à déplacer le faisceau lumineux par rapport au réservoir de façon à traverser des épaisseurs continûment variables de parois et de liquide ; l'intensité lumineuse de l'harmonique trois varie et passe par des maximums dont la hauteur et la périodicité permettent de déterminer la dispersion du liquide ($n_{3\omega}-n_\omega$) ainsi que sa susceptibilité non linéaire par comparaison avec un essai de référence sur un corps de caractéristiques connues.

Ce procédé implique la création d'interférences compliquées que l'on ne peut résoudre qu'avec un ordinateur. Une grande précision sur les angles caractérisant la géométrie du dispositif et une excellente planéité des surfaces des parois du réservoir sont requises.

On a donc également proposé (Thalhammer et Penzkofer, Applied Physics B32, p.137) un dispositif analogue mais dont les parois sont d'épaisseur constante et égale à un multiple pair de la longueur de cohérence du matériau de ces parois vis-à-vis de la lumière incidente. On peut alors montrer, en réalisant le vide entre les deux parois, que celles-ci sont susceptibles de n'émettre ensemble qu'une intensité négligeable de lumière d'harmonique trois. Toutefois, cette conclusion peut être remise en question si leur intervalle n'est plus occupé par du vide ; et surtout la fabrication de parois d'une planéité parfaite et d'épaisseur connue avec une grande précision rend ce procédé à peu près inutilisable en pratique, d'autant plus que la longueur de cohérence dépend de la longueur d'onde de la lumière et impose donc de travailler avec une lumière de couleur déterminée. D'après un troisième dispositif (Meredith, Buchalter et Hanzlik, Journal of Chemistry and Physics, n°78, p.1543), le liquide est disposé entre deux parois assez espacées et dont les surfaces internes sont parallèles ; par contre la surface externe de la paroi par laquelle le faisceau lumineux entre dans le dispositif est oblique, si bien que l'épaisseur de cette paroi est variable.

On focalise le faisceau sur cette paroi, et le procédé consiste comme précédemment à déplacer ce faisceau le long du dispositif. L'harmonique trois émis est d'intensité variable car il dépend de l'épaisseur de la fenêtre. L'harmonique émis par le passage dans le liquide reste quant à lui constant car on peut supposer l'épaisseur du liquide invariable : même si la fenêtre par laquelle sort le faisceau est disposée un peu obliquement, cette imprécision peut être négligée car le faisceau divergent est large (d'intensité surfacique faible) à cet endroit et ne crée pratiquement plus d'émission d'harmonique d'intensité non-linéaire.

Il est donc très facile de déterminer l'importance de l'harmonique trois émis par le liquide, mais le coefficient de susceptibilité ne peut être calculé que si on connaît la dispersion ($n_{3\omega}-n_\omega$) du liquide après avoir mené une autre expérience. On doit donc considérer que ce dispositif simple et précis n'est pas complet. De plus, il est d'un emploi moins général que les précédents, car il utilise une épaisseur de liquide plus importante et donc davantage opaque.

Ces trois dispositifs doivent en outre être placés dans une chambre à vide, car le faisceau lumineux est parallèle ou focalisé près de la surface du dispositif, si bien que le milieu extérieur est traversé, au moins localement, par un faisceau intense : une atmosphère émettrait donc elle aussi un harmonique trois, ce qui fausserait les résultats quel que soit le dispositif employé.

On peut donc affirmer qu'il n'existe pas dans l'art antérieur de dispositif permettant d'analyser les caractéristiques d'émission optique d'harmonique trois d'un corps de façon simple, précise et économique.

La présente invention pallie les inconvénients mentionnés plus haut dans les dispositifs antérieurs et permet de connaître ces caractéristiques à l'aide d'un dispositif placé dans l'atmosphère ambiante composé de deux parois épaisses, quasi jointives et légèrement obliques, entre lesquelles on dispose le corps à analyser et que l'on fait traverser par un faisceau convergent jusqu'à un point de focalisation puis divergent.

De façon plus précise, elle concerne un dispositif de mesure des caractéristiques optiques non linéaires d'ordre trois dans un milieu présentant une phase isotrope comprenant :

- des moyens faisant converger un faisceau monochromatique de pulsation $\omega$ jusqu'à un point de focalisation, puis le faisant diverger,
- deux prismes parcourus par le faisceau et séparés par un intervalle prismatique empli par la phase isotrope, les prismes et la phase isotrope étant composés de matériaux transparentes à la lumière du faisceau et à l'harmonique trois de cette lumière,
- un moyen de mesure de l'intensité de l'harmonique trois de la lumière du faisceau émise par le passage de ce faisceau dans les prismes et la phase isotrope,
- un moyen de déplacer ce faisceau par rapport aux prismes de façon à faire varier la distance parcourue par le faisceau dans la phase isotrope,

caractérisé en ce que le point de focalisation du faisceau est situé dans l'intervalle entre les prismes et en ce que les diamètres du faisceau convergent à l'entrée du premier prisme et divergent à la sortie du second prisme sont au moins cinq fois plus grands que le diamètre du faisceau au point de focalisation.

Il est également très avantageux que l'un des prismes soit constitué de deux couches de matériaux différents, et que le dispositif comprenne également un moyen de faire passer le faisceau, parcourant une distance quelconque dans la phase isotrope, par l'une ou l'autre des couches dudit prisme.

On va à présent décrire l'invention plus en détail à l'aide des figures annexées qui représentent respectivement, à titre illustratif et non limitatif :

- la figure 1 représente une vue de dessus du dispositif objet de l'invention,
- la figure 2 représente une vue en perspective partielle de l'invention.

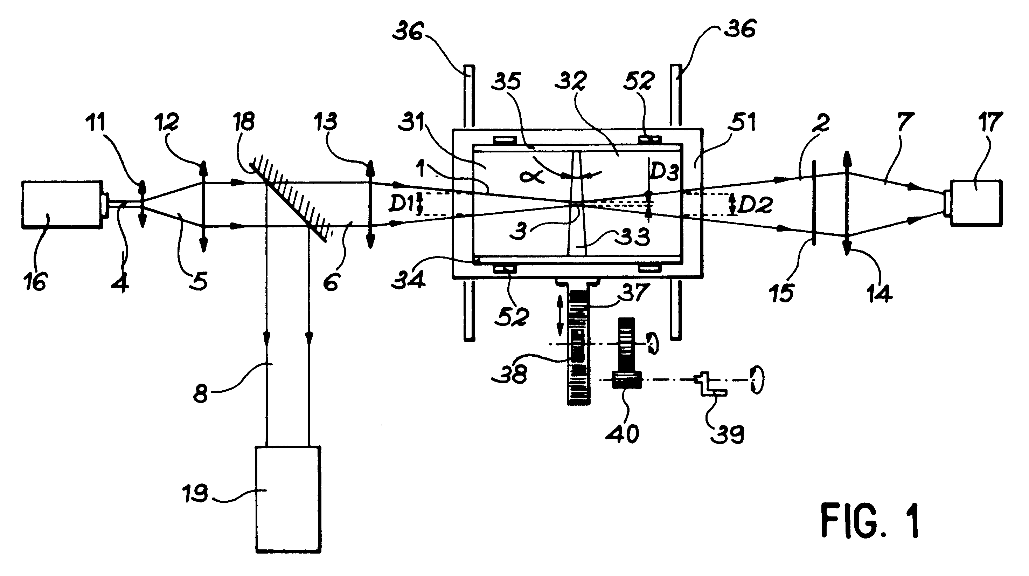

La figure 1 représente tout d'abord le faisceau lumineux 1 à 8 qui va provoquer l'émission de l'harmonique d'ordre trois. Comme ce phénomène est non linéaire, le faisceau doit être émis avec une grande intensité, par exemple au moyen d'un laser 16 ; le rayonnement parallèle monochromatique 4 de pulsation $\omega$ émis est tout d'abord rendu divergent en 5 à l'aide d'une lentille 11 ; une deuxième lentille 12 rend de nouveau le faisceau parallèle en 6, avec un diamètre beaucoup plus large qu'en 4.

Cette disposition permet d'obtenir une intensité surfacique plus faible dans l'air ambiant, ce qui supprime pratiquement toute émission d'harmonique trois.

Il est possible d'intercaler à cet endroit un dispositif annexe permettant de mesurer l'intensité du faisceau tel qu'un photodétecteur 19 que vient frapper le faisceau 8 produit de la déviation du faisceau 5 par un miroir 18 que l'on enlève évidemment pour procéder à l'expérience proprement dite.

Dans une variante, on utilise un miroir 18 semi-transparent.

D'après l'invention, le faisceau lumineux est focalisé en 3 dans le milieu présentant la phase isotrope 33 dont il faut mesurer les caractéristiques et qui emplit l'intervalle compris entre deux prismes 31 et 32 et fermé à ses extrémités par les parois 34 et 35. Cette phase isotrope 33 est généralement un liquide, mais elle peut aussi être un gaz ou même un solide à température de fusion suffisamment faible introduit à l'état fondu et que l'on laisse ensuite refroidir.

On interpose donc une autre lentille 13 qui fournit un faisceau convergent 1 qui pénètre dans le prisme 31 tout en étant encore d'un diamètre D1 assez large à l'entrée, et qui pénètre ensuite avec un diamètre beaucoup plus fin dans la phase isotrope 33 ; dans cette phase, le faisceau 3 est sensiblement cylindrique et acquiert un diamètre minimal D3, puis il devient divergent selon la référence 2 et pénètre dans le prisme 32 dont il ressort avec un diamètre assez large D2. D'après l'invention D1 et D2 doivent être très nettement plus importants que D3 ; les rapports D1/D3 et D2/D3 doivent être en tout cas supérieurs à 5 et de préférence supérieurs à 10. Le faisceau passe ensuite dans un filtre 15 qui arrête la lumière de pulsation $\omega$ ; seul subsiste donc un rayonnement de pulsation $3\omega$ qui a été émis par le passage du faisceau lumineux dans le prismes 31 et 32 et la phase isotrope 33 et qui est concentré sur un photomultiplicateur 17 à l'aide d'une lentille 14.

On constate que, contrairement aux dispositifs de l'art antérieur, les prismes 31 et 32 ont une épaisseur importante par rapport à la distance que le faisceau lumineux parcourt dans la phase isotrope 33. Cette construction permet d'obtenir une émission d'harmonique d'ordre trois dans la phase isotrope 33 et dans les parties des prismes 31 et 32 qui la jouxtent, c'est-à-dire là où le faisceau est le plus resserré et le plus intense ; par contre l'émission est à peu près nulle aux extrémités des prismes 31 et 32 et plus encore dans l'air ambiant, ce qui explique que l'épaisseur des prismes 31 et 32 ne nécessite pas d'être connue avec une grande précision et que la planéité de leurs surfaces extrêmes peut ne pas être soignée ; seules les surfaces en contact avec la phase isotrope 33 doivent être parfaitement polies. L'épaisseur des prismes 31 et 32 traversée par le faisceau 1 ou 2 doit être suffisante pour permettre une focalisation suffisante de celui-ci dans la phase isotrope 33 et de toute manière très grande devant la longueur de cohérence des ondes lumineuses dans les prismes 31 et 32 (plusieurs centaines de fois supérieure, c'est-à-dire quelques centimètres).

Bien entendu, il faut choisir des matériaux constitutifs des prismes 31 et 32 aussi transparents que possible aussi bien pour la lumière de pulsation $\omega$ que pour celle de pulsation $3\omega$.

L'intervalle où séjourne la phase isotrope 33 est en forme de coin d'angle d'ouverture a très aigu, de l'ordre du degré ou de la fraction de degré ; de plus les prismes 31 et 32 sont quasi jointifs de manière à ce que l'épaisseur de la phase isotrope 33, qui peut être plus ou moins opaque, reste limitée.

La nécessité d'un intervalle en forme de coin va maintenant apparaître à l'aide de la description de l'utilisation du dispositif.

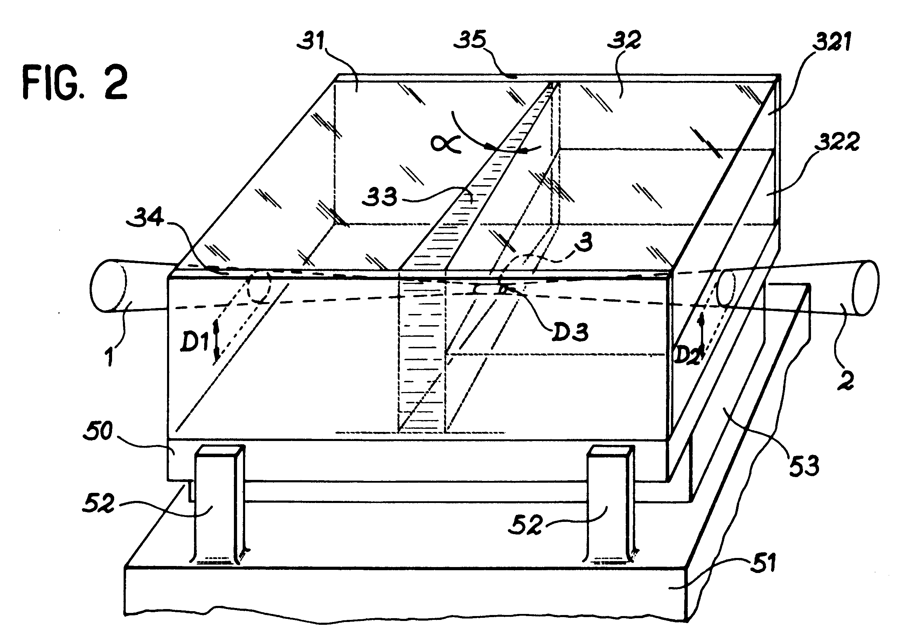

L'ensemble composé essentiellement des prismes 31 et 32 et de la phase isotrope 33 est mobile perpendiculairement à la direction du faisceau 1 à 8 de manière à ce que ce dernier traverse une épaisseur continûment variable de la phase isotrope 33. Un système mécanique quelconque peut y pourvoir ; on a représenté par exemple des rails ou des glissières 36 sur lesquels évolue le chariot 51 porteur des prismes 31 et 32 et qui entrave leur débattement transversal à l'aide de butées 52 représentées plus clairement figure 2. Le chariot est mû à l'aide d'une courroie ou d'une chaîne 37 actionnée par une roue 38 liée à une manivelle 39 ou entraînée automatiquement sous la commande d'un ordinateur. On peut encore intercaler un train d'engrenages 40 pour démultiplier le mouvement.

Au cours du déplacement du chariot 51, on constate que l'intensité de lumière d'harmonique trois émise et recueillie par le photomultiplicateur 17 est variable et périodique. On peut démontrer que la période p, correspondant à une variation d'épaisseur de phase isotrope 33 traversée par le faisceau égale à la longueur de cohérence $\ell c$ de cette phase, est définie par la relation p x $tg\alpha = \ell c$ dans laquelle $\ell c = \lambda_\omega/6(n_{3\omega} - n_\omega)$ où $\lambda_\omega$ désigne la longueur d'onde de la lumière de pulsation $\omega$ qui est facilement déterminée. Le déplacement du chariot 51 permet donc de connaître la dispersion $(n_{3\omega} - n_\omega)$ de la phase isotrope 33, à condition que sa course soit suffisante pour que l'on puisse mesurer une période du phénomène.

On peut déduire le coefficient de susceptibilité non linéaire d'ordre trois

$$\chi^{(3)}_L$$

de la phase isotrope 33 à l'aide de la dispersion dont on vient d'indiquer le procédé d'obtention, de l'intensité maximale de la lumière d'harmonique d'ordre trois qui a été mesurée, des caractéristiques du matériau constituant les prismes 31 et 32 et d'un essai d'étalonnage sur une autre phase isotrope L dont on connaît les caractéristiques. On peut en effet établir que si les indices de réfraction des différents matériaux ne sont pas trop différents et si les prismes 31 et 32 sont composés du même matériau

$$I_L/I_{L'} = \left[(\rho_p - \rho_L)/(\rho_p - \rho_{L'})\right] \text{ où } \rho_i = \chi^{(3)}_i/(n^2_{3\omega} - n^2_\omega)_i \; ;$$

L désigne la phase isotrope 33, L' la phase isotrope d'étalonnage, p le matériau constituant les prismes 31 et 32, et $I_j$ l'intensité maximale de lumière d'harmonique trois relevée au cours du déplacement du chariot 51, le corps j emplissant l'intervalle entre les prismes 31 et 32.

Une autre caractéristique importante de l'invention doit encore être décrite ; à cet effet on se reporte à la figure 2.

On y constate que le prisme de sortie du faisceau 32 est divisé en deux couches superposées 321 et 322 constituées de deux matériaux différents ; ces couches sont suffisamment épaisses pour contenir chacune le faisceau divergent 2 qu'il est possible de faire passer indifféremment par l'une ou par l'autre au moyen d'une cale 53 que l'on peut disposer entre le chariot 51 et le fond 50 du dispositif constitué principalement par les prismes 31 et 32.

L'utilité de cette division du prisme 32 apparaît quand on expose la phase isotrope 33 à un faisceau lumineux qui fasse opérer aux alentours d'une bande d'absorption ou d'une transition interdite. L'émission de l'harmonique trois est alors déphasée d'un angle $\phi$ et il faut écrire le coefficient de susceptibilité non linéaire sous forme complexe

$$|\chi_L^{(3)}|xe^{i\varphi} \quad ;$$

il en résulte que les équations écrites plus et permettant de déduire

$$\chi_L^{(3)}$$

en fonction de $I_L$ ne sont plus valables, d'autant plus que la forme générale de la courbe $I_L$ en fonction du déplacement latéral du chariot 51 n'est pas modifiée et qu'on ne peut donc pas diagnostiquer le déphasage par le simple aspect de cette courbe.

Il est donc nécessaire de procéder à une mesure complémentaire, ce qui explique la séparation du prisme 32 en deux couches 321 et 322. A l'aide de la cale 53, on fait passer tour à tour le faisceau lumineux 2 par la couche 321 et par la couche 322, et à chaque fois on procède au relevé de la variation d'intensité lumineuse d'harmonique trois par déplacement du chariot 51 comme on l'a déjà décrit.

Dans le cas d'un déphasage du coefficient de susceptibilité non linéaire $I_L$, les deux courbes d'intensité relevées sont différentes aussi bien pour l'amplitude des variations périodiques que pour la phase des minimums. Cette double information permet donc d'obtenir le module et la phase du coefficient de susceptibilité non linéaire.

Les matériaux constituant les couches 321 et 322 du prisme 32 peuvent être choisis tous deux différents de celui qui constitue le prisme 31 ; toutefois, pour des raisons de simplicité, on préférera employer le matériau du prisme 31 pour l'une des deux couches du prisme 32.

Ce dispositif présente donc un caractère très distinct de l'art antérieur dans la mesure où il est possible d'effectuer les mesures dans l'air ambiant, et où on utilise un faisceau convergent-divergent focalisé sur la phase isotrope 33 et qui traverse deux prismes 31 et 32 d'épaisseur importante. La juxtaposition de deux couches 321 et 322 de matériaux différents pour le prisme 32 est également une contribution originale de l'invention, car aucun des dispositifs précédemment connus ne fournissait de moyen simple de mesurer le déphasage éventuel du coefficient de susceptibilité non linéaire $\chi^{(3)}$ de la phase isotrope 33.

**Revendications**

1. Dispositif de mesure des caractéristiques optiques non linéaires d'ordre trois dans un milieu présentant une phase isotrope (33) comprenant :
   - des moyens faisant converger un faisceau lumineux monochromatique de pulsation $\omega$ (1) jusqu'à un point de focalisation, puis le faisant diverger (2),
   - deux prismes (31, 32) parcourus par le faisceau (1, 2) et séparés par un intervalle prismatique empli par la phase isotrope, les prismes (31, 32) et la phase isotrope (33) étant composés de matériaux transparents à la lumière du faisceau et à l'harmonique trois de cette lumière,
   - un moyen (37 à 40) de déplacer le faisceau (1, 2, 3) par rapport aux prismes (31, 32) de façon à faire varier la distance que parcourt ce faisceau dans la phase isotrope (33),
   - un moyen de mesure (17) de l'intensité de l'harmonique trois de la lumière émise par le passage du faisceau (1, 2, 3) dans les prismes (31, 32) et la phase isotrope (33), caractérisé en ce que le point de focalisation (3) du faisceau est situé dans l'intervalle entre les prismes (31, 32) et en ce que les diamètres (D1 et D2) du faisceau convergent (1) à l'entrée dans le premier prisme (31) et du faisceau divergent (2) à la sortie du second prisme sont au moins cinq fois plus grands que le diamètre (D3) du faisceau au point de focalisation (3).

2. Dispositif de mesure des caractéristiques optiques non linéaires d'ordre trois dans un milieu présentant une phase isotrope selon la revendication 1, caractérisé en ce que l'un des prismes (32) est composé de deux couches (321 et 322) de matériaux différents, et en ce que ce dispositif comprend un moyen (53) de faire passer le faisceau, parcourant une distance variable dans la phase isotrope (33), par l'une ou l'autre des couches dudit prisme (32).

**3.** Dispositif de mesure des caractéristiques optiques non linéaires d'ordre trois dans un milieu présentant une phase isotrope selon la revendication 2, caractérisé en ce qu'un des matériaux du prisme (32) qui en comprend deux est le matériau dans lequel est fabriqué l'autre prisme (31).

**4.** Procédé de mesure des caractéristiques optiques non linéaires d'ordre trois dans un milieu présentant une phase isotrope à l'aide du dispositif selon la revendication 1, caractérisé en ce qu'il consiste à déplacer continûment la position des prismes (31, 32) par rapport au faisceau (1, 2, 3) de façon à lui faire parcourir une distance dans la phase isotrope (33) variant d'au moins la longueur de cohérence d'ordre trois correspondant à cette phase (33) et à la lumière du faisceau (1, 2, 3) et à recueillir la courbe de variation de l'intensité de l'harmonique trois émise en fonction du trajet du faisceau (1, 2, 3) à l'aide du moyen de mesure (17) pour en déduire le coefficient de susceptibilité $\chi^{(3)}$ et/ou la dispersion $(n_{3\omega} - n_\omega)$ de la phase isotrope (33) par comparaison avec une courbe de référence.

**5.** Procédé de mesure des caractéristiques optiques non linéaires d'ordre trois dans un milieu présentant une phase isotrope à l'aide du dispositif selon l'une quelconque des revendications 2 ou 3, caractérisé en ce qu'il consiste à effectuer l'opération de déplacer continûment la position des prismes (31, 32) par rapport au faisceau (1, 2, 3) de façon à lui faire parcourir une distance dans la phase isotrope (33) variant d'au moins la longueur de cohérence d'ordre trois correspondant à cette phase (33) et à la lumière du faisceau (1, 2, 3), le faisceau (1, 2, 3) passant en outre dans une seule des couches (321) du prisme (32) qui en comprend deux ; à répéter cette opération, le faisceau (1, 2, 3) passant cette fois dans l'autre couche (322) dudit prisme (32) ; et à recueillir, à chacune de ces opérations la courbe de variation de l'intensité de l'harmonique trois émis en fonction du trajet du faisceau (1, 2, 3) à l'aide du moyen de mesure (17) pour en déduire le coefficient de susceptibilité $\chi^{(3)}$ et/ou la dispersion $(n_{3\omega} - n_\omega)$ de la phase isotrope (33) par comparaison avec une courbe de référence ; et à comparer les deux couches mesurées pour en déduire l'angle de déphasage du coefficient de susceptibilité $\chi^{(3)}$.

**Claims**

**1.** Apparatus for measuring the third order non-linear optical characteristics in a medium having an isotropic phase (33) comprising means making a monochromatic beam (1) converge to a focusing point and then making it diverge (2), two prisms (31, 32) traversed by the beam (1, 2) and separated by a prismatic gap filled by the isotropic phase, the prisms (31, 32) and the isotropic phase (33) being formed from materials transparent to the light of the beam and to the third harmonic of said light, a means (17) for measuring the intensity of the third harmonic of the light of the beam (1, 2, 3) emitted by the passage of said beam in the prisms (31, 32) and the isotropic phase (33), a means (37 to 40) for displacing said beam (1, 2, 3) relative to the prisms (31, 32) so as to vary the distance covered by the beam in the isotropic phase (33), characterized in that the focusing point (3) of the beam is located in the gap between the prisms (31, 32) and in that the diameters (D1, D2) of the convergent beam (1) on entering the first prism (31) and divergent beam (2) on leaving the second prism are at least five times greater than the diameter (D3) of the beam at the focusing point (3).

**2.** Apparatus for measuring third order non-linear optical characteristics in a medium having an isotropic phase according to claim 1, characterized in that one of the prisms (32) is formed from two layers (321, 322) of different materials and in that said apparatus comprises a means (53) for passing the beam, traversing a variable distance in the isotropic phase (33), through one or other of the layers of said prism (32).

**3.** Apparatus for measuring the third order non-linear optical characteristics in a medium having an isotropic phase according to claim 2, characterized in that one of the materials of the prism (32), which has two of them, is the material in which is produced the other prism (31).

**4.** Process for measuring the third order non-linear optical characteristics in a medium having an isotropic phase with the aid of the apparatus according to claim 1, characterized in that it consists of continuously displacing the position of the prisms (31, 32) relative to the beam (1, 2, 3), so as to make it travel a distance in the isotropic phase (33) varying by at least the third order coherence length corresponding to said phase (33) and to the light of the beam (1, 2, 3) and collecting the third harmonic intensity variation curve emitted as a function of the path of the beam (1, 2, 3) with the aid of the measuring means (17) in order to deduce therefrom the susceptibility coefficent $\chi^{(3)}$ and/or the

dispersion ($n_{3\omega}$-$n_\omega$) of the isotropic phase (33) by comparison with a reference curve.

5. Process for measuring the third order non-linear optical characteristics in a medium having an isotropic phase with the aid of the apparatus according to either of the claims 2 or 3, characterized in that it consists of carrying out the operation of continuously displacing the position of the prisms (31, 32) relative to the beam (1, 2, 3), so as to make it travel a distance in the isotropic phase (33) varying by at least the third order coherence length corresponding to said phase (33) and to the light of the beam (1, 2, 3), the beam (1, 2, 3) also passing into one of the layers (321) of the prism (32), which has two of them; said operation being repeated, the beam (1, 2, 3) on this occasion passing into the other layer (322) of said prism (32); and collecting, for each of these operations the third harmonic intensity variation curve emitted as a function of the path of the beam (1, 2, 3) with the aid of the measuring means (17), in order to deduce there from the susceptibility coefficient $\chi^{(3)}$ and/or the dispersion ($n_{3\omega}$ - $n_\omega$) of the isotropic phase (33) by comparison with a reference curve; and comparing the two measured layers in order to deduce therefrom the phase displacement angle of the susceptibility coefficient $\chi^{(3)}$.

## Patentansprüche

1. Vorrichtung zum Messen nichtlinearer optischer Eigenschaften dritter Ordnung in einer Umgebung isotroper Phase (33) mit:
   - Vorrichtungen zum Bündeln (1) eines monochromatischen Lichtstrahls mit Frequenz $\omega$ auf einen Brennpunkt und zum anschließenden Divergieren (2) des Lichtstrahls,
   - zwei Prismen (31, 32), die von dem Strahl (1, 2) durchlaufen werden und von einem prismatischen Intervall getrennt werden, das mit der isotropen Phase gefüllt ist, wobei die Prismen (31, 32) und die isotrope Phase (33) aus Materialien bestehen, die für das Licht des Lichtstrahls und die dritte Harmonische dieses Lichts transparent sind,
   - einer Vorrichtung (37 bis 40) zum Verschieben des Strahls (1, 2, 3) bezüglich der Prismen (31, 32), so daß der Abstand, den der Strahl in der isotropen Phase (33) durchläuft, verändert wird,
   - einer Meßvorrichtung (17) für die Intensität der dritten Harmonischen des durch den Durchgang des Strahls (1, 2, 3) durch die Prismen (31, 32) und durch die isotrope Phase (33) emittierten Lichts,
   dadurch gekennzeichnet, daß
   sich der Brennpunkt (3) des Lichtstrahls in dem Zwischenraum zwischen den Prismen (31, 32) befindet und daß die Durchmesser (D1 und D2) des konvergierenden Strahls (1) am Eingang in das erste Prisma (31) und des divergierenden Strahls (2) am Ausgang aus dem zweiten Prisma wenigstens fünf mal größer sind als der Durchmesser (D3) des Strahls am Brennpunkt (3).

2. Vorrichtung zum Messen nichtlinearer optischer Eigenschaften dritter Ordnung in einer Umgebung isotroper Phase nach Anspruch 1, dadurch gekennzeichnet, daß das eine der Prismen (32) aus zwei Schichten (321 und 322) aus unterschiedlichen Materialien besteht und daß die Vorrichtung eine Vorrichtung (53) zum Durchführen des Strahls, der einen variablen Abstand in der isotropen Phase (33) durchläuft, durch die eine oder die andere der Schichten des Prismas (32) umfaßt.

3. Vorrichtung zum Messen nichtlinearer optischer Eigenschaften dritter Ordnung in einer Umgebung isotroper Phase nach Anspruch 2, dadurch gekennzeichnet, daß eines der Materialien des Prismas (32), das zwei davon aufweist, dasjenige Material ist, aus dem das andere Prisma (31) besteht.

4. Verfahren zum Messen nichtlinearer optischer Eigenschaften dritter Ordnung in einer Umgebung isotroper Phase mit Hilfe der Vorrichtung nach Anspruch 1, dadurch gekennzeichnet, daß es darin besteht, kontinuierlich die Position der Prismen (31, 32) bezüglich des Strahls (1, 2, 3) derart zu verändern, daß er einen Abstand in der isotropen Phase (33) durchläuft, der sich wenigstens um die Kohärenzlänge dritter Ordnung, die dieser Phase (33) und dem Licht des Strahls (1, 2, 3) entspricht, ändert, und die Kurve der Änderung der Intensität der dritten Harmonischen, die als Funktion der Trajektorie des Strahls (1, 2, 3) ausgesandt wird, mittels der Meßvorrichtung (17) aufzunehmen, um daraus den Suszeptibilitätskoeffizienten $\chi^{(3)}$ und/oder die Dispersion ($n_{3\omega}$ - $n_\omega$) der isotropen Phase (33) durch Vergleich mit einer Referenzkurve abzuleiten.

5. Verfahren zum Messen nichtlinearer optischer Eigenschaften dritter Ordnung in einer Umgebung isotroper Phase mit Hilfe der Vorrichtung nach einem der Ansprüche 2 oder 3, dadurch gekennzeichnet, daß es darin besteht, kontinuierlich die Position der Prismen (31, 32) bezüglich des Strahls (1, 2, 3) derart zu verändern, daß er einen Abstand in der isotropen Phase (33) durchläuft, der sich wenigstens um die Kohärenzlänge dritter Ordnung, die dieser Phase (33) und dem Licht des Strahls (1, 2, 3) entspricht, ändert, wobei der Strahl außerdem nur eine der Schichten (321) des Prismas (32) durchläuft, das zwei davon aufweist; diesen Vorgang zu wiederholen, wobei der Strahl (1, 2, 3) dieses mal die andere Schicht dieses Prismas (32) durchläuft; und bei jedem dieser Vorgänge die Kurve der Änderung der Intensität der dritten Harmonischen, die als Funktion der Trajektorie des Strahls (1, 2, 3) ausgesandt wird, mittels der Meßvorrichtung (17) aufzunehmen, um daraus den Suszeptibilitätskoeffizienten $\chi^{(3)}$ und/oder die Dispersion ($n_{3\omega}$ - $n_\omega$) der isotropen Phase (33) durch Vergleich mit einer Referenzkurve abzuleiten; und die beiden gemessen Schichten zu vergleichen, um daraus den Phasenverschiebungswinkel des Suszeptibilitätskoeffizienten $\chi^{(3)}$ abzuleiten.

FIG. 1

FIG. 2

31  35  32  321
322
34
α
33
3
D1  D3
D2
50
52  52
53
51
1  2

EP 0 263 743 B1